Europäisches Patentamt

European Patent Office

Office européen des brevets

(11) Numéro de publication : **0 341 161 B1**

# (12) FASCICULE DE BREVET EUROPEEN

(45) Date de publication du fascicule du brevet :
**19.08.92 Bulletin 92/34**

(51) Int. Cl.$^5$ : **B23P 19/08**

(21) Numéro de dépôt : **89401267.3**

(22) Date de dépôt : **03.05.89**

(54) **Machine automatique de distribution et de pose des segments sur les pistons de moteurs thermiques.**

(30) Priorité : **05.05.88 FR 8806060**

(43) Date de publication de la demande :
**08.11.89 Bulletin 89/45**

(45) Mention de la délivrance du brevet :
**19.08.92 Bulletin 92/34**

(84) Etats contractants désignés :
**DE ES FR GB IT SE**

(56) Documents cités :
**US-A- 4 084 727
US-A- 4 212 096
SOVIET INVENTIONS ILLUSTRATED, semaine
K06, 23 mars 1983, section P/Q, classe P56, no.
B 9688K/06, Derwent Publications Ltd, Londres, GB; & SU-A-916 220 (V.A. GRAF) 27-03-1986**

(73) Titulaire : **RENAULT AUTOMATION
Centre PARLY II Boite Postale 70
F-78152 Le Chesnay Cedex (FR)**
Titulaire : **SOCIETE BROCHOT
42 à 56, boulevard de la République
F-93190 Livry Gargan (FR)**

(72) Inventeur : **Maron, Lionel
22, avenue de la Division Leclerc
F-93000 Bobigny (FR)**

(74) Mandataire : **Srour, Elie et al
REGIE NATIONALE DES USINES RENAULT (S.
0804) 8 & 10 Avenue Emile Zola
F-92109 Boulogne Billancourt (FR)**

## Description

L'invention concerne une machine automatique de distribution et de pose des segments sur les pistons de moteurs thermiques selon le préambule de la revendication 1.

Une machine telle que décrite dans le préambule de la revendication 1 est connue dans l'art antérieur.

La pose des segments sur les différents pistons de moteurs thermiques s'effectue actuellement manuellement par des opérateurs au moyen d'ogives sur lesquelles sont empilés les segments.

Il existe des versions de moteurs thermiques à essence et Diesel de différentes cylindrées pouvant, de plus, présenter des contraintes fonctionnelles différentes, il en résulte un grand nombre de variantes:

– au moins soixante variantes de pistons (diamètre, position des gorges,

– au moins une quarantaine de types de segments (matière, diamètre et épaisseur, ouverts, fermés etc...,

– chaque piston est muni de plusieurs segments différents.

A chaque changement de type de moteur ou de piston il est nécessaire:

– de changer d'ogive sur laquelle sont empilés des segments d'un seul type, la position des segments et leur diamètre, voire leur matière, étant différents,

– de retirer les segments en place sur la colonne de distribution pour mettre ceux correspondant au nouveau type,

La solution de pose manuelle présente les inconvénients suivants:

– dans le cas de segments ouverts, ceux-ci sont maintenus ouverts de 5 minutes à 48 heures sur les ogives correspondantes, il s'ensuit une déformation élastique qui devient rapidement permanente, donc une non-qualité;

– casse de segments;

– erreurs sur les types de segments dûe à leur diversité et aux difficultés de repérage visuel de certains types. Ces erreurs engendrent un coût important puisque il faut effectuer une dépose du moteur et un changement de segments;

– économique: le temps de passage d'un type de moteur à un autre est long, au moins 15 minutes avec des pertes et casse de segments, ceux restant empilés sur les ogives ne sont pas récupérés,

– onéreux du fait de l'importance du personnel utilisé et de la fiabilité insuffisante.

Des machines automatiques de distribution et de pose de segments sur les pistons de moteurs thermiques ont été développées, dans lesquelles les segments sont mis en place successivement sur des ogives d'expansion de diamètre intérieur pour être déposés sur les pistons correspondants. Malheureusement ces machines ne satisfont pas pleinement les contraintes de tenue en cadence et de fiabilité nécessaires à leur utilisation sur les chaînes de montage.

La machine automatique de pose selon l'invention a notamment pour objet de pallier ces divers inconvénients.

A cet effet, la machine suivant l'invention est définie par la combinaison des caractéristiques selon la revendication 1.

Selon une réalisation préferentielle, cette machine est intégrée dans une ligne d'assemblage comportant un ou plusieurs sites robotisés suivant la cadence désirée, chaque site comprenant:

– une machine automatique de distribution de segments un par un, équipée pour:

– détromper efficacement les différents types de segments;

– effectuer l'approvisionnement en continu du site ;

– assurer le changement de type de segment en un temps extrêmement court;

– un robot ayant pour fonction:

. de prendre un à un les pistons, de les déposer sur un poste d'initialisation équipé d'une caméra identifiant un code figurant sur celui-ci et fournissant une référence précise de hauteur;

. de les reprendre pour les présenter successivement dans l'alésage des ogives de mise en place des segments en assurant une position en hateur précise de la gorge dans laquelle doit être déposé automatiquement le segment correspondant, par exemple, racleur, d'étanchéité, coup de feu, depuis chacune de ces ogives, le piston pouvant avoir deux à quatre gorges ou plus. Les segments arrivent préalablement empilés sur des mandrins spéciaux orientés suivant la fente, équipés de détrompeurs d'approvisionnement, par diamètre, par matière, fournisseurs et autres critères. Ils sont mis en place manuellement dans les chargeurs disposés à l'extérieur, en dehors de la surface de déplacement du bras du robot. Ils sont munis également de détrompeurs d'orientation, de type de segments, et de contrôle d'approvisionnement des segments par la hauteur d'empilement.

Chaque chargeur est déposé, en dehors du temps de cycle, sur le support de fixation correspondant. Les segments sont extraits par un tiroir se trouvant en dessous du chargeur, les transférant un à un sous l'ogive correspondante. Chaque segment ouvert est poussé sur l'ogive correspondante par une pince extérieure. Il s'expanse au passage pendant une fraction de seconde jusqu'à ce qu'il glisse, au sommet de l'ogive, dans la gorge du piston présenté par le robot. Les ogives sont fixées sur un barillet de sélection de type. Dans le cas de segments fermés, les ogives sont maintenues chacune par une pince du barillet. Le système de pose recentre et immobilise l'ogive au moyen d'une pince interne traversant le tiroir transfert de segments, puis la pince du barillet est ouverte pour laisser le passage du segment sur l'ogive, poussé par une pince extérieure passant également au travers du tiroir. Le robot comporte cinq axes, il est équipé d'une pince tournant par fractions égales de tour suivant le nombre de segments par piston, après chaque pose d'un nouveau segment. Les pistons, équipés de leur bielle, sont préalablement déposés, dans une station hors du site, à une position précise sur une palette équipée d'empreintes où ils sont pris et recentrés par la pince de préhension du robot avant d'entamer la procédure de mise en place des segments.

Selon une variante de réalisation de l'invention, le robot, de type cinq axe, est remplacé par un manipulateur sur portique prévu pour travailler en ligne depuis la palette avançant mécaniquement pas-à-pas sur la ligne de déplacement; son axe vertical est également équipé d'une pince de préhension tournant par fractions de tours.

La mise à hauteur du piston dans l'ogive peut être effectuée en butée dans le fond de l'ogive dans le cas où l'on a à équiper un seul type de piston; les barillets de sélection des pistons sont alors supprimés. On peut aussi utiliser un robot ou un manipulateur dans ce cas pour accroître la cadence. Dans le cas ou l'on a plusieurs types de pistons à équiper de segments, on change les ogives mécaniquement, par exemple avec des barillets ou en ligne, à chaque nouveau type de piston. On peut conserver les mêmes ogives dans le cas ou l'on ne change pas de diamètre de segments mais seulement de matière, ou de fournisseur. Ces mêmes ogives peuvent alors être alimentées par une seconde série de tiroirs adaptés pour recevoir ces nouveaux segments en évitant les erreurs de pose.

Tous les segments peuvent être montés sur une unique ogive alimentée soit par des tiroirs montés en ligne, soit par des tiroirs convergents intervenant successivement dans le cycle. L'alimentation comporte autant de tiroirs qu'il y a de gorges à équiper de segments. La référence en hauteur des pistons dans l'alésage de l'ogive est donnée par l'appui sur le fond de l'alésage, une pince tournant par fractions de tour, disposée au-dessus de l'ogive est montée sur un chariot vertical à déplacement à commande numérique, initialisée par un code introduit au moment du changement du piston, de la même façon que précédemment. La pince positionne successivement chaque piston à la hauteur correspondant à chaque gorge après chaque dépose de segment, sans sortir de l'ogive, assure les orientations relatives des fentes des segments.

Les avantages de la machine selon l'invention sont les suivants:
– zéro défaut par suppression des erreurs sur les types de segments;
– Accroîssement très important de la cadence de mise en place, fonctionnement 24 heures sur 24;
– suppression des opérateurs par automatisation totale du processus;
– non limitations du nombre de combinaisons possibles de types de segments à poser, ouverts ou fermés, et des types de pistons à équiper;
– suppression de la casse des segments;
– suppression du marquage des bords des segments;
– suppression de la déformation élastique permanente des segments qui ne sont plus maintenus ouverts;
– suppression de l'opération de vidage des chargeurs pour le changement de type de pistons, d'où un gain de temps, la suppression des pertes de segments en place sur les ogives et devenus inutilisables.

La machine selon l'invention est décrite dans le texte qui suit, en référence aux dessins annexés, donnés à titre d'exemples non limitatifs, dans lesquels:
– la fig.1 montre une vue en perspective d'ensemble d'un site automatisé selon l'invention;
– les fig. 2 à 6 montrent des exemples de la machine en élévation, vue de dessus et vues en coupes;
– la fig. 7 montre une vue en élévation d'un piston avec les différents paramètres de pose des segments;
– les figs. 8 à 10 montrent la constitution d'un mandrin spécial d'alimentation des segments;
– les fig.11 à 15 montrent un exemple de réalisation de chargeur de segments;
– les fig.16 et 17 montrent un exemple de système de réception, de détrompage et d'immobilisation des chargeurs sur le dessus du corps de tiroirs;
– la fig.18 montre, vu en élévation, un exemple de tiroir et son moyen de manoeuvre;
– la fig.19 montre, en vue de dessus, un exemple de pince de maintien d'une ogive sur un barillet,
– la fig.20 montre, en vue de dessus, un exemple de moyen de manoeuvre d'une pince extérieure de mise en place des segments;
– la fig.21 montre un exemple d'empreinte de tiroir en vue de dessus;
– les fig.22 et 23 montrent un exemple de système de reprise d'une ogive destinée à mettre en place des segments fermés, au-dessus du système de pose des segments, et du système de manoeuvre de la pince de poussée des segments fermés;
– la fig.24 montre un exemple de système de manoeuvre de la pince expansible de poussée d'un segment ouvert sur une ogive;
– les fig.25 à 28 montrent, un exemple de dispositif de recentrage et d'immobilisation par l'intérieur, d'un ogive de mise en place des segments fermés.

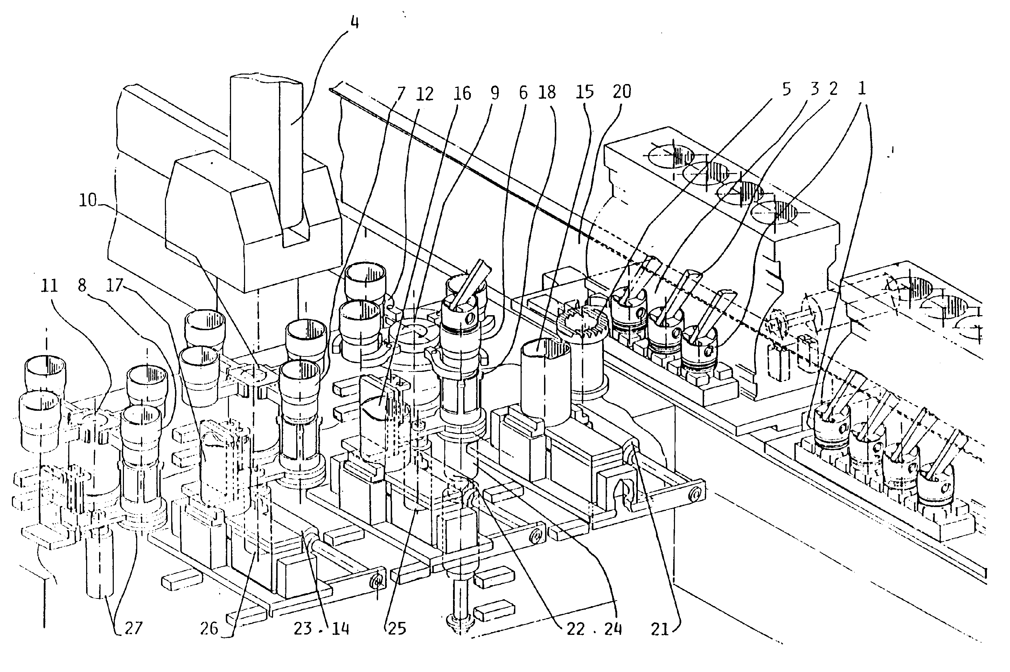

La fig.1 montre, vue en perspective, l'ensemble de la machine. Les pistons 1, équipés de leur bielle 2, sont transférés mécaniquement pas-à-pas, sur des palettes 3, à une position précise, où le robot 4 les prend un à un pour les présenter successivement:

    – sur le poste d'initialisation 5 dans lequel une micro-caméra lit un code d'identification figurant sous le piston, et sur lequel le robot enregistre la référence de hauteur;

    – dans l'alésage de l'ogive 6 de pose du segment racleur;

    – dans l'alésage de l'ogive 7 de pose du segment d'étanchéité;

    – dans l'alésage de l'ogive 8 de pose du segment coupe-feu;

    – sur la palette à son emplacement initial puis le robot prend le piston suivant et poursuit le même cycle pour chaque palette. Le code ne peut, en variante, figurer sur les palettes 3. Dans ce cas, un détecteur de code approprié, connu, fournit les informations d'initialisation à la place de la caméra. Les différents types d'ogives correspondants aux divers pistons sont montés sur les barillets 9,10,11. Le barillet 9 est équipé de pinces 12 pour la présentation des ogives pour le montage de segments fermés; sur les barillets 10 et 11 sont fixés des ogives pour la mise en place de segments ouverts dits d'étanchéité et coup de feu. Les barillets sont présentés avec quatre ogives. Le nombre d'ogives que l'on montre sur les barillets est fonction des besoins; il pourrait être à trois comme à six positions ou plus. Ils sont entraînés en rotation par un dispositif 13,14 à pignon-crémaillère et roue libre, mû par exemple par un vérin pneumatique assurant la rotation d'une position d'ogive à chaque mouvement, le choix du diamètre du piston définissant le nombre de mouvements pour présenter l'ogive qui convient suivant le code du piston. Les segments sont approvisionnés dans des chargeurs 15,16,17. Chaque poste de pose de segments est équipé d'une pince 18 poussant les segments sur l'ogive au moyen d'un ensemble 19.

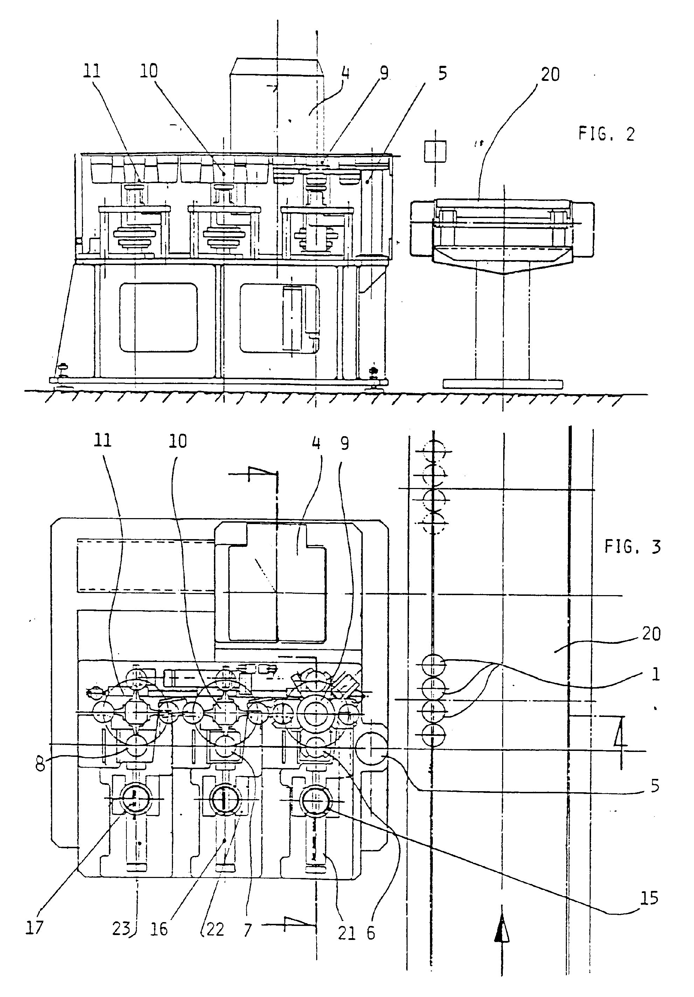

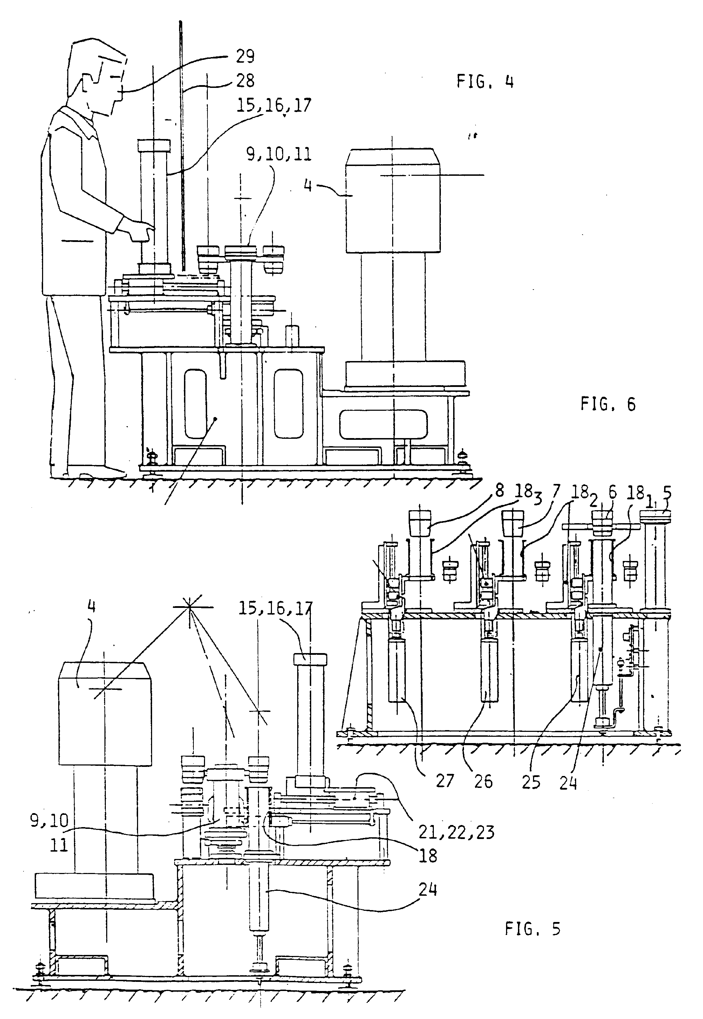

Le détail de ces différents ensembles sera décrit dans les figures suivantes. Sur les fig. 2 à 6 on a montré, schématiquement la position des différents ensembles montrés sur la fig.1. Sur les fig.2 et 3 on voit la position du robot 4 par rapport au convoyeur 20 sur lequel se déplacent les palettes 3, la position des barillets 9,10,11 et des ogives, les tiroirs transferts 21, 22, 23 d'approvisionnement des segments sous les ogives.

On a montré également le dispositif 24 de mise en place des segments fermés (fig.5 et 6) et les dispositifs 25,26,27 de poussée des pinces 18 de mise en place des segments.

Pour éviter les accidents, un écran 28 protège l'opérateur 29 mettant les segments dans les chargeurs 15,16,17 (fig.4), se trouvant en dehors du site de déplacement du bras du robot 4.

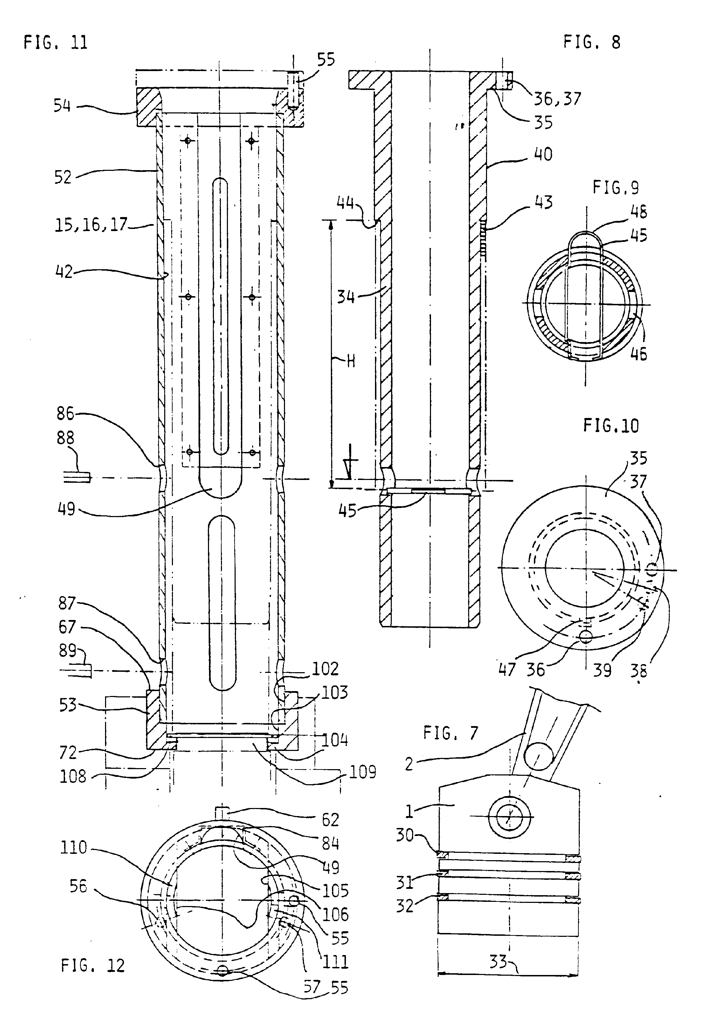

La fig.7 montre un exemple de piston 1 comportant trois gorges, 30 du segment racleur, 31 du segment d'étanchéité, 32 du segment coupe-feu. Le nom des segments diffère avec les constructeurs. Ces segments peuvent avoir des épaisseurs différentes et être réalisés en différentes matières. Le segment racleur est généralement fermé. Le diamètre 33 varie avec les modèles de moteurs. L'exemple montré comporte quatre diamètres de pistons, donc quatre ogives différentes.

Les segments sont mis en place sur chacun des chargeurs 15,16,17 au moyen d'un mandrin spécial. Il est prévu un mandrin par type de segment (diamètre, matière, épaisseur, fournisseur, ouvert, fermé). Le type de variables par segments nécessite d'utiliser divers détrompeurs pour éviter les erreurs de segments. Les fig. 8,9 et 10 montrent un exemple de mandrin 34 réalisé en matière plastique. Il est de forme tubulaire avec une collerette 35 percée de deux trous 36,37 de détrompage s'engageant sur les pions correspondants du chargeur. Le trou 37 est à une position différente 38,39, représentée en traits pointillées, pour chacun des trois mandrins mis en place dans les chargeurs 15,16,17, fig.11,12,13,14,15. Le haut du diamètre extérieur du mandrin comporte une portée 40 de centrage dans l'alésage 42 du chargeur. Les segments 43 sont empilés contre l'épaulement 44 de la portée 40 et arrêtés sur une épingle 45 engagée dans une fente correspondante disposée au niveau d'un trou 46 de contrôle photo-électrique de niveau d'approvisionnement en segments. Les segments sont orientés sur le mandrin au moyen d'une clavette 47. Si le mandrin n'est pas bien orienté, il ne peut pas être mis en place dans le chargeur à cause de la partie débordante 48 de l'épingle qui est prévue pour s'engager dans une fente 49 du chargeur. Si la recharge de segments n'est pas la bonne pour un type donné, l'épingle ne se trouve pas en face de sa zône d'accès 49 dans le chargeur et ne peut pas être extraite pour laisser descendre les segments sur la pile en cours d'utilisation. La couleur du mandrin est également utilisée comme détrompeur visuel pour l'une des caractéristiques des segments.

Le chargeur, fig. 11 à 15, se compose d'un tube 52, d'une base de centrage 53 et d'une collerette 54 dans laquelle sont emmanchés les pions détrompeurs 55 des trous 36, 37, 38,39 de la collerette 35 des mandrins. Les emplacements de ces pions sont différents pour chaque chargeur. La base de centrage 53 comporte les détrompeurs suivants:

    – détrompage mécanique au moyen de deux trous 56,57 pour le chargeur des segments coup de feu 32 - 58,59 pour le chargeur des segments d'étanchéité 31 - 60,61 pour le chargeur des segments racleurs 30; ces trous étant disposés à des emplacements différents;

– un pion 63 de détrompage d'orientation de l'ensemble des chargeurs dans le corps du tiroir aux emplacements 64 pour les segments racleurs, 65 pour les segments d'étanchéité, 66 pour les segments coup de feu;

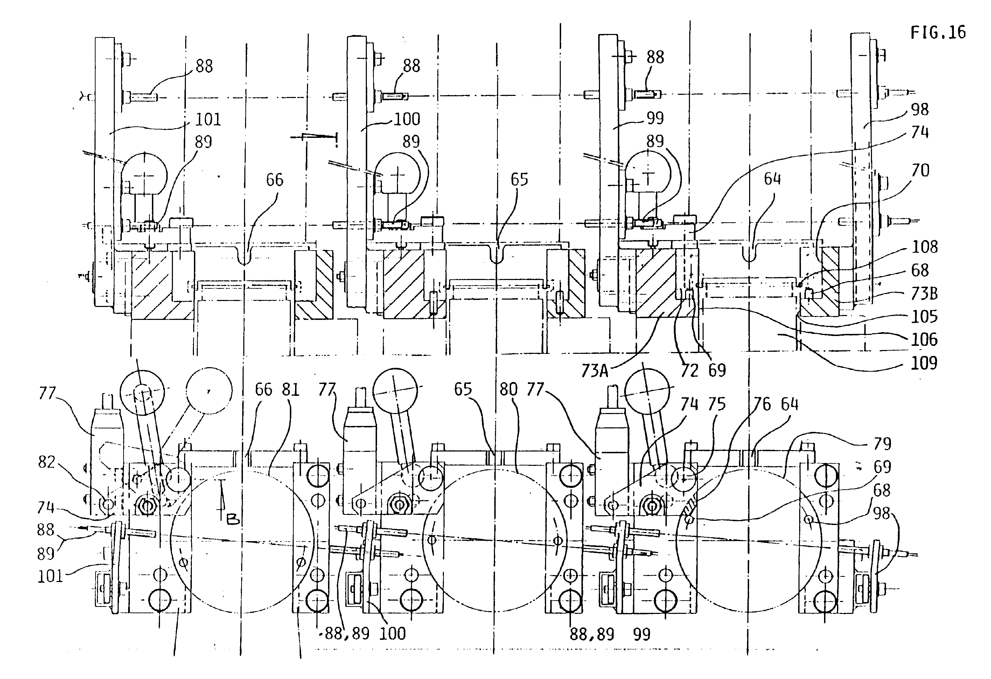

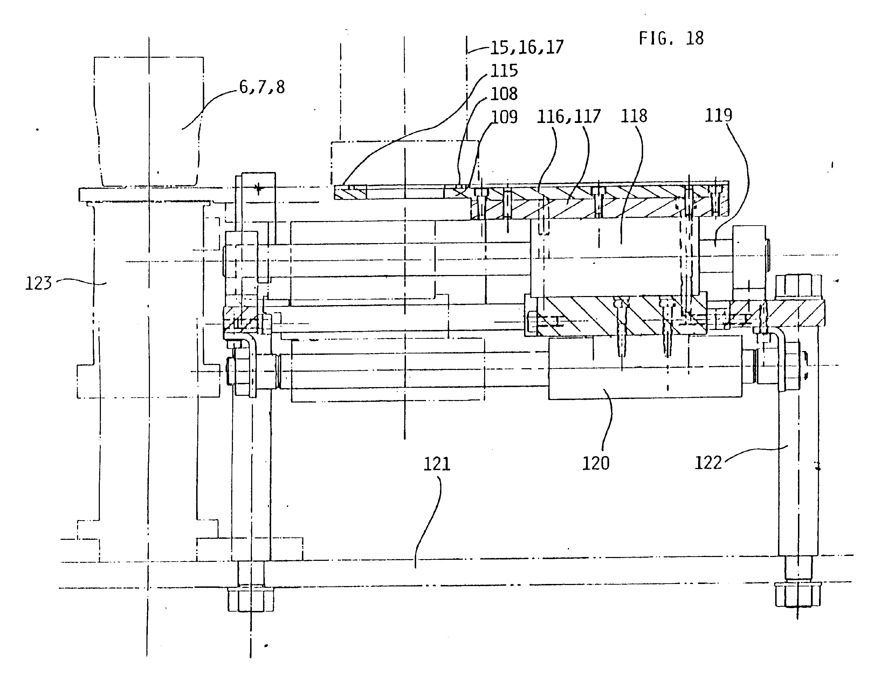

– détrompage mécanique par le dessus 67 de la base de centrage en coopération avec pions 68,69 de détrompage de sélection des types de segments fig.16,17 racleur, étanchéité, coup de feu au moyen des trous 56,57-58,59-60,61, disposés au fond du logement de centrage 70; lorsque le chargeur présenté n'est pas le bon et donc ne correspond pas à la position où il est présenté au dessus du tiroir, dans l'alésage 70,

le dessous 72 de la base 53 repose sur le dessus des pions de détrompage 68,69, il est trop haut et il n'est plus possible de le verrouiller sur le corps de tiroir 73 au moyen du verrou 74 articulé en 75 et immobilisant la base 53 par la partie hachurée 76 (fig.17) du verrou 74. Sur la partie gauche de la fig.17, on a représenté le levier 74 en position déverrouillée en traits mixtes. Une sécurité électrique, constituée par une cellule photo électrique 77 à réflexion, disposée à chaque emplacement 79,80,81 de chargeur, contrôle la présence d'un pion 82 solidaire du verrou 74 pour vérifier si le verrouillage de chacun des chargeurs est effectifs pour autoriser le fonctionnement de la machine. Les chargeurs (fig.12,13,14,15) comportent en outre un capot 84 destiné à masquer la rainure 49 de passage de la partie extérieure 48 de l'épingle en ne laissant libre que sa partie inférieure 85, ainsi que deux trous traversant 86,87. Le trou 86 coopére avec une détection photo-électrique 88 de contrôle du niveau d'approvisionnement en segments (fig.16 et 17) déclenchant un signal sonore ou visuel d'appel de l'opérateur pour la mise en place d'un nouveau mandrin d'approvisionnement; le trou 87 coopère avec une détection photo-électrique 88 déclenchant l'arrêt de la machine si l'approvisionnement de segments n'a pas été effectué.

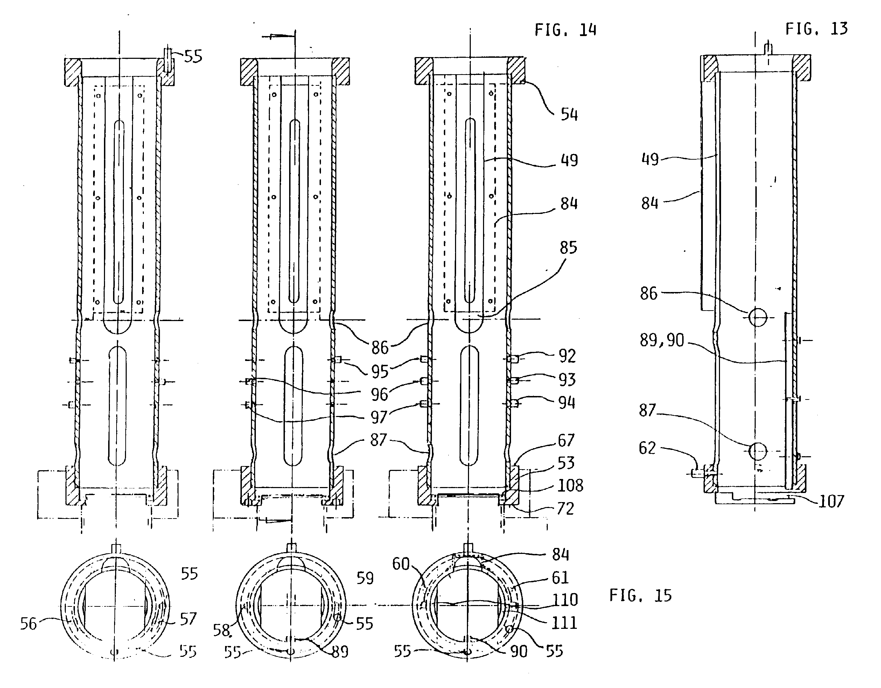

Chaque chargeur est muni d'une clavette 89,90 (fig.13,15) disposée dans le prolongement de la clavette du mandrin pour assurer la continuité d'orientation des segments. Chaque chargeur est équipé d'un code d'identification de caractéristiques complémentaires telles que épaisseur, matière, fournisseurs etc..., ce code est obtenu au moyen d'une combinaison de pions pris par exemple parmi six emplacements 92,93,94 et 95,96,97 disposés par trois de chaque côté du chargeur. Les détecteurs correspondants sont montés sur les supports de détection photo-électrique 98,99,100,101 (fig. 16,17) sur le support de chargeur fixé sur chacun des bâtis de tiroirs. La base des chargeurs comporte un alésage épaulé 102 dans lequel est engagé et fixé le tube 52 (fig. 11) et un second alésage épaulé 103 disposé dans le prolongement du diamètre intérieur du tube 52.

L'épaulement 104 comporte un usinage parallèle 105,106, ouvrant la base sur un côté 107 (fig.13) pour permettre l'extraction des segments par le tiroir 109, les segments étant retenus sur les parties 110,111 de l'épaulement 104 et se trouvant en appui sur le dessus du tiroir hors de l'empreinte lorsque celle-ci se trouve sous l'ogive.

Les supports de chargeurs 73A, 73B, sont fixés sur le châssis de chaque côté du passage du tiroir 109. Comme décrit précédemment les supports de chargeurs, coopérant avec les tiroirs, comportent des moyens pour recevoir, orienter, sélectionner par détrompage et sécurités mécaniques et électriques, les chargeurs correspondant au divers types de segments. Il y a autant de positions différentes 79,80,81 de chargeurs que de gorges sur les pistons. Le tiroir 109 (fig.17) est constitué par une première plaque métallique 115 comportant une empreinte de segment disposée sous le chargeur 15,16,17. Elle recouvre une seconde plaque 116,117 fixée sur des paliers linéaires à billes 118 se déplaçant sur des glissières cylindriques 119 et constituant un chariot mû par exemple par un vérin pneumatique 120. L'ensemble est fixé sur une table 121 du bâti de la machine au moyen de colonnes 122. On a représenté une ogive 6,7,8 et, en traits mixtes, la position du tiroir engagé sous l'ogive au dessus du dispositif de mise en place des segments 123.

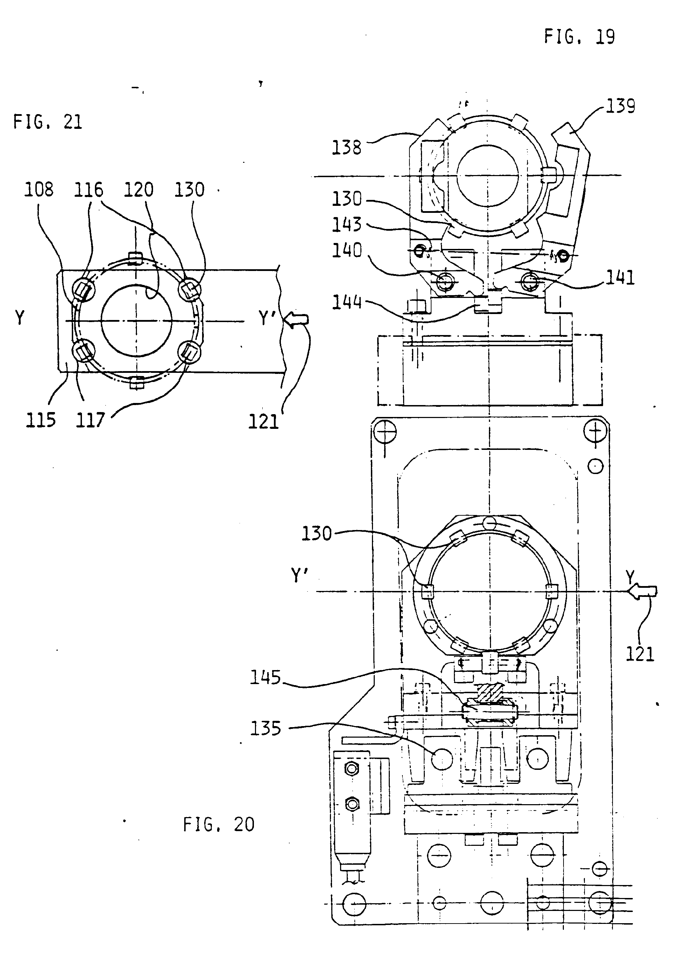

La plaque tiroir 115 (fig.21) est percée de quatre trous 116, 117, de passage des branches de la pince extérieure de poussée 130 sur l'ogive et de mise en place du segment. Elle est également percée d'un trou central 120. Le segment déborde de chaque côté de la plaque tiroir. Le tiroir se déplace suivant le sens de la flèche 121 sur l'axe YY'. Des capteurs sont disposés de chaque côté sur le passage du segment 108 pour contrôler son transfert effectif et arrêter la machine en cas de casse de segment. La profondeur de l'empreinte est lègèrement inférieure à l'épaisseur des segments pour éviter d'en entraîner deux.

Les fig.19,20 et 22,23 montrent, en vue de dessus et en élévation un exemple de dispositif de manoeuvre de la pince extérieure 130 de poussée des segments fermés sur l'ogive 6 avec la pince de maintien. La pince 130, réalisée en acier à ressort, comporte 6 branches, déformables élastiquement au passage sur le cône d'expansion 131 de l'ogive, solidaire d'une embase cylindrique 132 fixée sur une équerre 133 sur laquelle sur montés des paliers linéaires à billes 134 se déplaçant verticalement sur des glissières cylindriques 135 au moyen, par exemple d'un vérin pneumatique 136. La pince 130 et l'ogive 6 sont disposées suivant un même axe vertical XX'. L'ogive 6 est prise entre des pinces 138,139 articulées sur le barillet 9 en 140,141, serrées par un ressort de traction 143 et manoeuvrées par un levier 144 articulé en 145, poussé par des galets 146 agissant sur une rampe 147 au moment de la levée de la pince. On a montré le piston P engagé dans un alésage 150 de l'ogive avec son segment racleur 151 en place. L'épaisseur de la paroi 152 de l'ogive est très faible pour réduire au minimum la déformation élastique de mise en place des segments. le dispositif est fixé sur le bâti par une équerre 154.

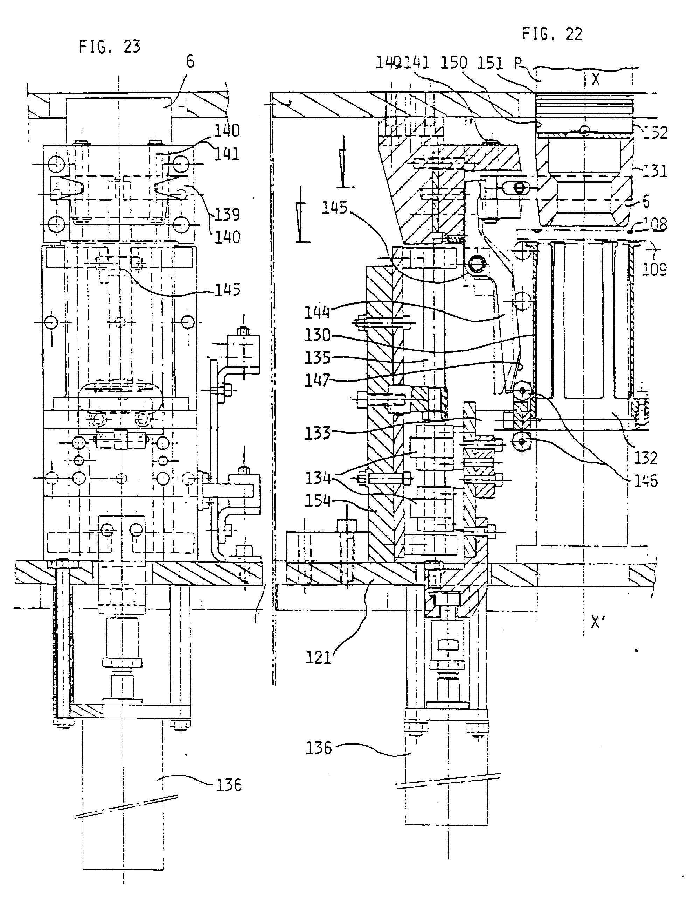

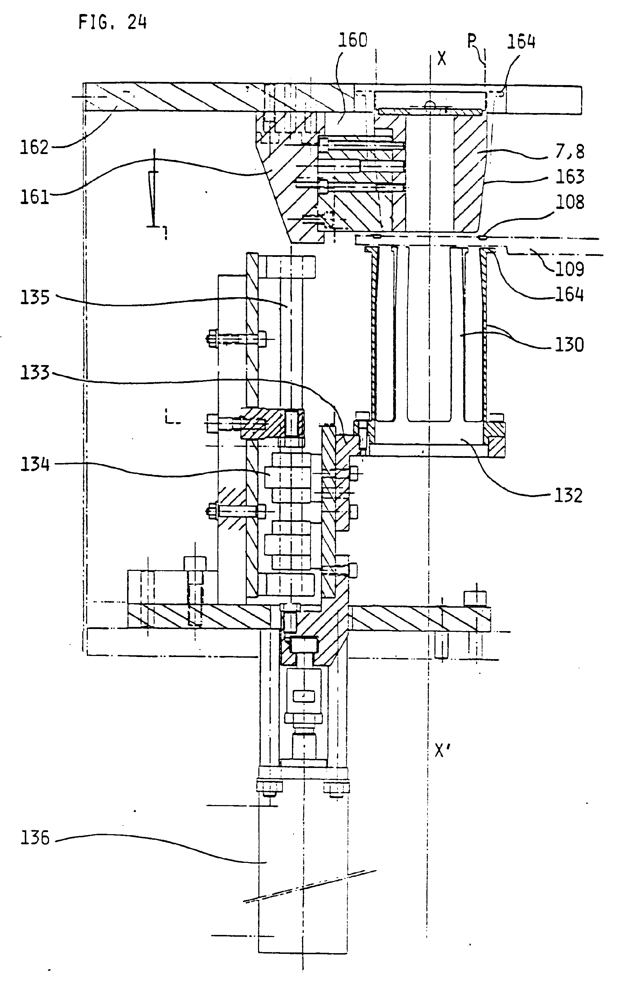

La fig.24 montre, en coupe partielle en élévation, un exemple de dispositif de mise en place des segments ouvert. L'ogive 7,8, est fixé sur le barillet au moyen d'une plaque verticale 160 présentant une épaisseur, au droit du passage de la fente du segment, compatible avec la largeur de la fente et à son orientation. la plaque 160 est fixée sur un bloc 161 solidaire du barillet 162. Le dispositif de manoeuvre de la pince 130 est le même que celui des fig. 21 et 22 sauf que la pince de maintien de l'ogive et son mécanisme d'ouverture sont supprimés.

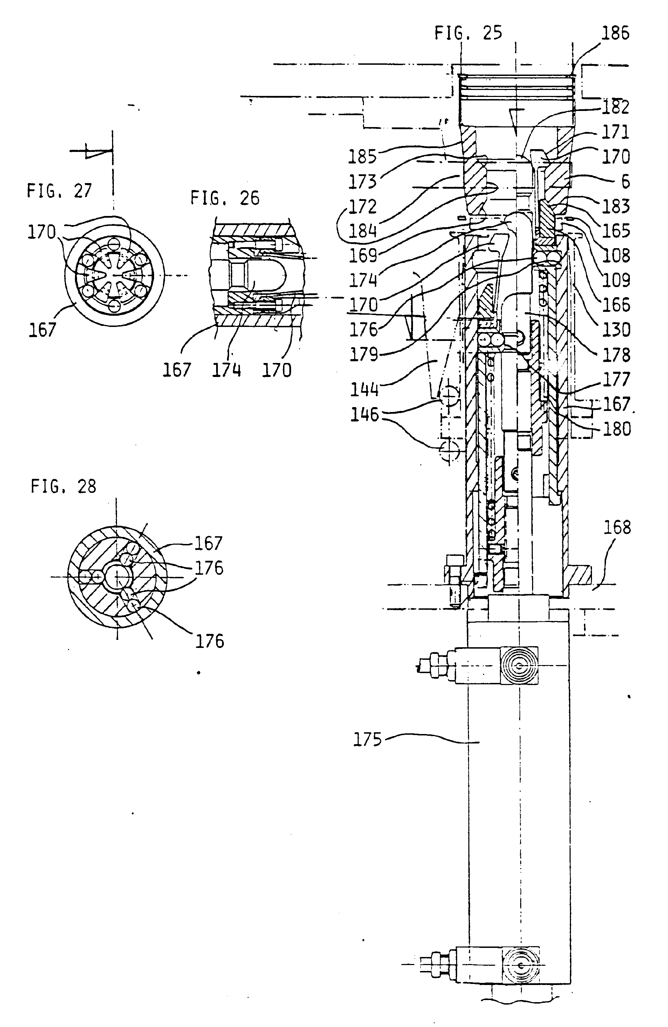

Les . fig.25,26,27 et 28 montrent un exemple de mécanisme de recentrage et de fixation, par l'intérieur, de l'ogive 6 de mise en place des segments fermés. Cette ogive 6, comme on l'a déjà montré sur les fig. 22,23, est maintenue par une pince extérieure 139,140. Cette pince empêche le passage des segments. Au moment de leur mise en place par la pince extérieur 130, il est donc indispensable d'écarter les mâchoires 138,139 de cette pince (fig.19).

Pour pouvoir effectuer cette opération, l'ogive est recentrée de l'intérieur par la portée cônique 165 d'un fourreau tubulaire 166, se déplaçant dans une douille 167 fixée sur le barillet 168, venant en appui sur une portée complémentaire 169 de l'ogive; l'immobilisation de l'ogive est obtenue au moyen d'une pince intérieure 170, montrée en vue de dessus sur la fig. 27, réalisée en acier à ressort, elle se déforme élastiquement au passage au travers de l'ogive, grâce à un cône d'entrée 171, successivement sur le cône 169, sur un perçage 172, puis sur un contre-cône 173 sur lequel les branches de la pince 170 viennent se bloquer, en coopération avec la portée 165 du fourreau, sous l'action d'un poussoir 174 mû par exemple par la tige d'un vérin pneumatique 175. On montré la position du segment 108 présenté par le tiroir 109 sous l'ogive. Le fourreau 166 ainsi que la pince interne 170 et la pince externe 130 passent au travers du tiroir 109, le fourreau et la pince 170 par le trou central 120 et la pince externe par les trous 116,117 (fig. 19). Pour permettre la succession synchronisée des opérations de mise en place du segment fermé le mouvement de levée s'effectue suivant les séquences successives suivantes:

– mise en butée de la portée cônique 165 du fourreau contre le cône 169 de l'ogive simultanément à la mise en place de la pince 170 non ouverte au droit du cône interne 173 de l'ogive, les billes 176, primitivement dégagées dans la gorge 177 d'une tige centrale 178, s'engagent dans une gorge extérieure 179 de la douille 167, ce qui a pour effet d'immobiliser le fourreau 166; le poussoir interne 174 poursuit sa levée cependant qu'un ressort de compression 180 maintient la portée 165 en appui sur le cône 169 de l'ogive; Lorsque le poussoir 174 arrive en fin de course en 182, il écarte les branches de la pince 170 qui se trouvent expansées contre le cône 173 de l'ogive et assure le serrage et le centrage de l'ogive, les pinces extérieures 138,139 de centrage et de maintien de l'ogive sont écartées ensuite au moment de la levée de la pince extérieure 130 (sur la description des fig. 22,23.). Cette pince soulève reposant primitivement dans l'empreinte-du tiroir, l'engage sur le cône extérieur 183 de l'ogive sur lequel il se recentre du fait que l'empreinte du tiroir peut admettre des différences de diamètre de segment d'au moins quatre millimètres, franchit la portée cylindrique 184 sur laquelle l'ogive est prise en pince, puis s'expanse sur un second cône 185 et arrive au sommet de l'ogive d'où il se place enfin élastiquement dans la gorge du piston P présentée par le robot ou tout autre moyen. Le piston est retiré puis présenté successivement dans les autres ogives cependant que la pince extérieure 130 redescend en refermant les mâchoires 138,139 de la pince extérieure de l'ogive, puis le vérin 175 retire le poussoir 174, la pince interne 170 se rétracte et se dégage de l'ogive en revenant en position de repos dégageant le passage pour la mise en place d'un autre segment fermé.

La mise en place des segments ouverts sur les ogives 7 et 8 est plus simple puisqu'il n' y a pas de reprise de l'ogive, celle-ci étant solidaire du corps du barillet. La mise en place s'effectue au moyen de la pince 130, laquelle passe au travers du tiroir, soulève le segment et le pousse sur l'ogive où il se recentre, s'expanse et se met en place dans sa gorge sous l'action du vérin 136 (fig.22,23).

Les déplacements des chariots de manoeuvre du tiroir et des pinces, retrait et aprovisionnement d'un nouveau segment sous l'ogive, s'effectuent pendant les temps morts, c'est-à-dire pendant la pose d'un segment aux postes suivants. La cadence de mise en place des segments peut donc être très élevée.

Le moyen 5 d'initialisation et de référencement en hauteur (fig.1,2,3et 6) est constitué d'un tube fixé sur le bâti par une embase et comportant une collerette dont la face supérieure, parallèle aux gorges des pistons, constitue la face de référencement en hauteur du robot 4 ou d'un manipulateur. Elle peut également servir dans le cas de pose des segments à partir d'une ogive unique. Une micro-caméra fixée dans ce tube identifie le code des piston à partir d'un logiciel incluant un programme de référence.

## Revendications

1. Machine automatique de distribution et de pose de segments sur les pistons de moteurs thermiques dans laquelle les segments sont mis en place successivement sur des ogives d'expansion du diamètre intérieur pour être déposés sur les pistons correspondants, caractérisé en ce qu'elle comporte:
   – un moyen automatique (4) de préhension des pistons (1) sur les palettes (3) d'un convoyeur (20) à avance mécanique précise pas-à-pas, et se présentation aux différents postes de mise en place des segments,
   – un moyen (5) de détection du type des pistons prélevés sur le convoyeur,
   – un moyen (5) d'initialisation et de référencement en hauteur des gorges des pistons sur les ogives (6,7,8),
   – une pince de préhension des pistons et d'orientation de la fente des segments équipant le moyen (4) de préhension des pistons, tournant par fraction de tour correspondant au nombre de gorges des pistons,
   – des barillets (9,10,11) de sélection et de présentation des ogives (6,7,8) correspondant au diamètre des pistons et leur moyen de manoeuvre présentant l'ogive correspondant au code d'initialisation au droit du dispositif de mise en place des segments sur les pistons,
   – des dispositifs (18,2-18,3) de mise en place automatique de segments ouverts expansés au passage sur l'ogive (7,8) correspondante,
   – au moins un dispositif (24) de mise en place automatique de segments fermés sur l'ogive correspondante (6)
   – des tiroirs automatiques (21,22,23) d'amenage un à un des segments sous chaque ogive,
   – des chargeurs (15,16,17) de distribution des segments sur chacun des tiroirs automatiques d'amenage,
   – des mandrins d'approvisionnement des divers types de segments,
   – des détrompeurs mécaniques et électriques prévus pour éliminer les segments ne correspondant pas au type à distribuer et pour éviter les erreurs de destinations des différents chargeurs,

2. Machine selon la revendication 1, caractérisée en ce que la palette (3) est équipée d'un code désignant le type des pistons convoyés à équiper.

3. Machine selon la revendication 1, caractérisé en ce que le moyen (5) d'initialisation et de référencement en hauteur est constitué d'un tube fixé sur le bâti, dont la face supérieure, parallèle aux gorges des pistons, constitue la face de référencement en hauteur du moyen (4) de préhension des pistons, et en ce qu'une micro-caméra est fixée dans le tube de façon à identifier, à partir d'un programme de référence, un code porté par la face inférieure de chaque piston.

4. Machine selon les revendications 1,2 et 3, caractérisé en ce que les barillets sont prévus pour recevoir autant de positions d'ogives différentes que de variantes de diamètre de pistons à segments ouverts et/ou fermés, et en ce que les barillets, recevant les ogives pour segments fermés, sont équipés de pinces de centrage et de maintien coopérant avec une pince interne du dispositif (24) de mise en place des segments fermés, et en ce que les ogives (7,8) de mise en place des segments ouverts, sont rendues solidaires du corps tournant des barillets, et en ce que le rotation des barillets, pour présenter l'ogive correspondant au code détecté par le lecteur de code, est obtenue au moyen d'un système à pignon-crémaillère et roue libre, entraîné par un vérin, tournant le corps du barillet d'une position à chaque mouvement, le code du diamètre du piston à équiper définissant le nombre de mouvements pour présenter l'ogive du diamètre correspondant.

5. Machine selon les revendications 1 et 4, caractérisé en ce que le dispositif de mise en place automatique des segments ouverts comporte une pince extérieure (130), réalisée en acier à ressort, à plusieurs branches solidaires d'une base (132) fixée sur un chariot mû verticalement suivant l'axe XX' par un moyen mécanique, et en ce que ladite pince est disposée au repos sous la position d'alimentation du tiroir (109) de présentation des segments, et sous l'ogive (7,8) présentant un cône (163) de recentrage et d'expansion des segments (108), l'ogive étant solidaire du barillet.

6. Machine selon les revendications 1 et 4, caractérisée en ce que le dispositif de mise en place des segments fermés comporte les mêmes éléments que le dispositif de mise en place des segments ouverts avec en plus des galets (146) de commande d'ouverture de la pince (139,140) de centrage et de maintien de l'ogive (6), agissant sur la rampe (147) d'un levier d'ouverture (144) articulé en (145) sur le bloc support de pince (139,140) et des moyens de reprise interne, de centrage et d'immobilisation de l'ogive (6).

7. Machine selon les revendication 1 et 6, caractérisée en ce que les moyens de reprise interne de l'ogive (6) sont constitués par un fourreau de recentrage (166) muni à son extrémité libre d'un cône (165) de centrage, se déplaçant dans une douille (167), coopérant avec une pince interne 170) en acier à ressort normalement rétractée, fermée par un poussoir (182) de façon à s'appuyer sur un cône interne (173) de l'ogive (6) immobilisant l'ogive en coopération avec le cône (165) du fourreau (166) en appui sur le cône interne inférieur (69) de l'ogive, l'ensemble étant mû en synchronisme dans le cycle par un moyen mécanique ou électromécanique.

8. Machine selon les revendications 1,5 et 6, caractérisé en ce que le tiroir comporte:

— des moyens pour recevoir, orienter (64), détromper (68,69) mécaniquement et électriquement le chargeur correspondant audit tiroir et un moyen (74) pour l'immobiliser associé à une sécurité électrique (82) de contrôle de fermeture,

— une empreinte de segment ménagée dans une table de transfert (109) se déplaçant sous le chargeur et à l'intérieur de sa base dans un usinage (105,106), ladite empreinte comportant un trou central (120) de passage d'une pince interne du moyen de reprise de l'ogive (6), et des trous (116,117) de passage des branches de la pince extérieure (130) de mise en place des segments,

— des capteurs fixés sur les supports (98,99, 100,101) destinés à reconnaître un code mécanique d'identification de caractéristiques complémentaires des segments fixés sur le chargeur,

— des détecteurs photo-électriques (88) destinés à détecter le niveau d'approvisionnement des segments dans le chargeur, et à appeler l'opérateur pour recharger, et à arrêter la machine si l'approvisionnement en segments n'a pas été renouvellé,

— un moyen mécanique ou électro-mécanique de manoeuvre du chariot transférant le tiroir sous l'ogive correspondante, équipé de capteurs de fin de course et de capteurs de contrôle de transfert effectif du segment sous l'ogive.

9. Machine selon les revendications 1 et 8, caractérisé en ce qu'il est constitué d'un tube (52) comportant une collerette supérieure (54) munie de moyens de détrompage mécanique (55) des mandrins d'approvisionnement en segments, d'une embase (53) comportant au fond un dégagement parallèle (105,106) de retenue des segments ouvert en (107), laissant passer le tiroir (109) d'extraction des segments, des moyens de détrompage mécanique sur le tiroir (56,57-58,59-60,61) et d'orientation (62) coopérant avec des moyens complémentaires des tiroirs, deux trous (86,87) de passage des faisceaux des détecteurs photo-électriques (88,89) de réapprovisionnement en segments et d'arrêt de la machine en cas de manque de segments, une rainure verticale (49) de passage de la partie débordante (48) du moyen de retenue des segments sur le mandrin, un moyen de codage mécanique (92,93,94,95,96,97) de caractéristiques complémentaires des segments.

10. Machine selon les revendications 1 et 9, caractérisée en ce que le mandrin d'approvisionement des chargeurs en segments est réalisé en matière plastique, il est de forme tubulaire comportant une collerette (35) équipée de détrompeurs mécaniques complémentaires de ceux de la collerette du chargeur dans lequel il est introduit et centré par un épaulement (40), les segments sont orientés au moyen d'une clavette (47), en appui sur un épaulement (44) de la portée (40) et sur un moyen de retenue inférieure (45) permettant la mise en place dans le chargeur, la hauteur (H) de la recharge de segments constitue un autre détrompage, un détrompage supplémentaire est obtenu visuellement par la couleur des mandrins.

11. Machine selon l'une quelconque des revendications précédentes, caractérisée en ce que le moyen (4) de préhension et de manipulation des pistons est un robot à cinq axes, prévu pour prélever les pistons sur des palettes (3) se déplaçant mécaniquement à une position de présentation précise, il présente les pistons successivement sur le poste d'initialisation et de prise de référence de hauteur, puis au droit de chaque ogive (6,7,8) dans leur alésage (150) à la hauteur de gorge correspondant au segment à mettre en place, puis repose ensuite le piston sur la palette et recommence le cycle avec les suivants, et en ce que son cinquième axe est équipé d'une pince tournant d'un angle d'orientation des fentes correspondant au nombre de segments équipant le piston à chaque pose d'un nouveau segment.

12. Machine selon l'une quelconque des revendications 1 à 10, caractérisé en ce que le moyen (4) de préhension et de manipulation des pistons est un manipulateur sur portique prévu pour travailler en ligne depuis une palette (3) avançant mécaniquement pas-à-pas sur la ligne de déplacement, et en ce que l'axe vertical est équipé d'une pince tournante identique à celle du robot.

**Patentansprüche**

1. Automatische Maschine zum Verteilen und Setzen von Ringen auf den Kolben von Verbrennungsmotoren, in der die Ringe nacheinander auf Kegeln angeordnet werden, deren Innendurchmesser aufweitbar ist, um auf dem zugehörigen Kolben aufgebracht zu werden, dadurch gekennzeichnet, daß sie die folgenden Bauteile aufweist:

— eine automatische Greifanordnung (4) für die Kolben (1) auf Paletten (3) eines Förderbandes (20) mit genauem mechanischem schrittweisen Vorschub und zur Darbietung an die verschiedenen Setzstellen der Ringe,

— eine Anordnung (5) zur Feststellung des vom Förderband ergriffenen Kolbentyps,

— eine Anordnung (3) zur Initialisierung und zur Markierung der Höhe der Kolbennuten an den Kegeln (6, 7,8),

— einen Greifer zum Ergreifen der Kolben und zur Ausrichtung des Spaltes der Ringe, mit dem die Greifanordnung (4) für die Kolben versehen ist und der sich entsprechend der Anzahl der Nuten in den Kolben um einen Bruchteil einer Umdrehung verdreht ,

— Gehäuse (9,10,11) zur Auswahl und zur Vorbereitung der Kegel (6,7,8) entsprechend dem Durchmesser der Kolben samt Handhabungsanordnung, die den Kegel entsprechend dem Initialisierungscode gegenüber der Anordnung zum Setzen der Ringe auf die Kolben befördert,
– eine Anordnung (18,2-18,3) zum automatischen Setzen der offenen Ringe, die während ihres Weges entlang der zugehörigen Kegel (7,8) aufgeweitet wurden,
– wenigstens eine Anordnung (24) zum automatischen Setzen der geschlossenen Ringe auf den zugehörigen Kegel (6),
– automatische Schieber (21,22,23), um die Ringe einzeln unter jeden Kegel zu fördern,
– Belader (15,16,17) zur Verteilung der Ringe auf jeden der automatischen Förderschieber,
– Versorgungsgestelle für die verschiedenen Arten von Ringen,
– und mechanische oder elektrische Sicherheitsanordnungen, die vorgesehen sind, um nicht zur Verteilung geeignete Ringe auszusondern und Fehler beim Einsatz der verschiedenen Belader zu vermeiden.

2. Maschine nach Anspruch 1, dadurch gekennzeichnet, daß die Palette (3) mit einem Code versehen ist, der den transportierten einzusetzenden Kolben bezeichnet.

3. Maschine nach Anspruch 1, dadurch gekennzeichnet, daß die Anordnung (5) zur Initialisierung und zur Markierung der Höhe aus einem am Grundgestell befestigten Rohr besteht, dessen obere Fläche parallel zu den Kolbennuten die Markierungsfläche für die Höhe der Greiferanordnung (4) bildet und daß eine Mikrokamera im Rohr derart angeordnet ist, daß sie ausgehend von einem Vergleichsprogramm einen an der Innenfläche eines jeden Kolbens angebrachten Code identifizieren kann.

4. Maschine nach Ansprüchen 1, 2 oder 1, dadurch gekennzeichnet, daß die Gehäuse vorgesehen sind, um so viele unterschiedliche Kegelstellungen aufzunehmen, wie Varianten der Kolbendurchmesser für offene und/oder geschlossene Ringe vorhanden sind, daß die Gehäuse, die die Kegel für die geschlossenen Ringe aufnehmen, mit Zentrier-und Haltegreifern versehen sind, die mit einem inneren Greifer der Anordnung (24) zum Setzen der geschlossenen Ringe zusammenwirken, daß die Kegel (7,8) zum Setzen der offenen Ringe fest mit den sich drehenden Körpern der Gehäuse verbunden sind und daß die Drehung der Gehäuse zur Ausrichtung des zugehörigen Kegels gemäß dem von der Leseanordnung für den Code festgestellten Code durchgeführt wird mittels einer Vorrichtung, welche ein Ritzel, eine Zahnstange und ein freies Rad aufweist und die durch einen Druckzylinder antreibbar ist, wobei der Körper des Gehäuses bei jeder Bewegung zu einer neuen Stellung verdreht wird und der dem Durchmesser des einzubauenden Kolbens entsprechende Code die Anzahl der Bewegungen definiert, so daß der Kegel an den zugehörigen Durchmesser angepaßt ist.

5. Maschine nach Ansprüchen 1 und 4, dadurch gekennzeichnet, daß die Anordnung zum automatischen Setzen der offenen Ringe einen äußeren Greifer (130) aufweist, der aus Federstahl besteht und mehrere Arme aufweist, die fest mit einem Grundteil (112) verbunden sind, das an einem Wagen befestigt ist, welcher senkrecht entlang einer Achse XX′ über eine mechanische Anordnung bewegbar ist und daß der Greifer in der Ruhestellung unterhalb der Versorgungsstellung des Schiebers (109) für die Übergabe der Ringe angeordnet ist sowie unterhalb des Kegels (7,8), der einen Konus (163) zur erneuten Zentrierung und zur Aufweitung der Ringe (108) aufweist, wobei der Kegel mit dem Gehäuse fest verbunden ist.

6. Maschine nach Ansprüchen 1 und 4, dadurch gekennzeichnet, daß die Anordnung zum Setzen der geschlossenen Ringe die gleichen Teile aufweist wie die Anordnung zum Setzen der offenen Ringe sowie zusätzlich Rollen (146) zur Steuerung der Öffnung des Zentrier- und Haltegreifers (139,140) für den Kegel (6), die auf die Steigung (147) eines Öffnungshebels (144) wirken, der bei (145) am Halteblock für den Greifer (139,140) angelenkt ist sowie mit einer Anordnung zur inneren Rückstellung der Zentrierung und der Festlegung des Kegels (6).

7. Maschine nach Ansprüchen 1 und 6, dadurch gekennzeichnet, daß die Anordnung zur inneren Rückstellung des Kegels (6) aus einer Zentrierspindel (166) besteht, an deren freien Ende ein Zentrierkonus (165) vorgesehen ist, der sich in einer Buchse (167) bewegt, die mit einem inneren Greifer (170) aus Federstahl zusammenwirkt, der normalerweise zurückgezogen ist und durch einen Schieber (182) derart verschlossen ist, daß bei einer Abstützung auf dem inneren Konus (173) des Kegels (6) der Kegel im Zusammenwirken mit dem Konus (165) der Spindel (166) bei Abstützung auf dem inneren unteren Konus (69) des Kegels festgestellt wird, wobei die Gesamtanordnung synchron mit dem Zyklus durch eine mechanische oder elektromechanische Anordnung in Bewegung gehalten wird.

8. Maschine nach Ansprüchen 1, 5 und 6, dadurch gekennzeichnet, daß der Schieber folgende Bauteile aufweist:
– eine Anordnung zum Aufnehmen, Ausrichten (64), mechanischen oder elektrischen Sichern (68,69) des zu diesem Schieber gehörenden Beladers sowie eine Feststellanordnung (74), die einer elektrischen Sicherheitsanordnung (82) zur Kontrolle und zum Schließen zugeordnet ist,
– eine Ringvertiefung, die in einem Transporttisch (109) vorgesehen ist, der sich unterhalb des Beladers und dem Inneren dessen Grundteil in einer Ausnehmung (105, 106) bewegt, wobei die Vertiefung ein zentrales Loch (120) zum Durchlaß eines Innengreifers der Rückstellanordnung für den Kegel (6) aufweist, sowie Öffnungen (116,117) zum Durchlaß von Armen des Außengreifers (130) zum Setzen der Ringe,

– Fühler, die an Halterungen (98,99, 100,101) befestigt sind zum Erkennen eines mechanischen Identifizierungscodes für zusätzliche Eigenschaften der Ringe, die am Belader befestigt sind,

– fotoelektrische Detektoren (88) zu Feststellung der Zufuhrhöhe der Ringe im Belader und zur Warnung der Bedienungsperson im Hinblick auf eine Nachladung und zum Anhalten der Maschine, wenn kein Nachschub an Ringen erfolgt,

– und eine mechanische oder elektromechanische Anordnung zur Handhabung des den Schieber bewegenden Wagens unter den zugehörigen Kegel, die mit Weganschlagfühlern und Fühlern zur Kontrolle und wirksamen Steuerung des Ringes unterhalb des Kegels versehen ist.

9. Maschine nach Ansprüchen 1 und 8, dadurch gekennzeichnet, daß ein Rohr (52) vorgesehen ist mit einem oberen Flansch (54), welcher eine mechanische Sicherheitsanordnung (55) für die Ringversorgungsgestelle aufweist, ein Grundteil (51), dessen Boden eine parallele Aussparung (105,106) zur Aufnahme der offenen Ringe bei (107) aufweist und den Schieber (109) zur Abnahme der Ringe durchläßt, eine mechanische Sicherungsanordnung am Schieber (56,57-58,59-60,61) aufweist sowie zur Ausrichtung (62), die mit komplementären Schieberanordnungen zusammenwirken, wobei zwei Öffnungen (86,87) zum Durchlaß von Strahlen der fotoelektrischen Detektoren (88,89) für den Nachschub an Ringen und den Halt der Maschine vorgesehen sind, im Falle des Fehlens von Ringen sowie eine senkrechte Nut (49) zum Durchlaß des auskragenden Abschnitts (48) der Halteanordnung für die Ringe am Gestell vorgesehen ist und eine Anordnung zur mechanischen Codierung (92,93,94,95,96,97) für die zusätzlichen Ringeigenschaften.

10. Maschine nach Ansprüchen 1 und 9, dadurch gekennzeichnet, daß das Versorgungsgestell der Ringbelader aus Kunststoff besteht, daß es Rohrform aufweist und einen Flansch (15) enthält, der mit mechanischen Sicherheitsanordnungen versehen ist, komplementär zu denjenigen des Flansches des Beladers, in den es eingeführt und zentriert wird durch eine Schulter (40); wobei die Ringe mittels eines Keiles (47) ausgerichtet sind, indem sie sich auf einer Schulter (44) des Rahmens (40) abstützen sowie auf einer unteren Halteanordnung (45), die das Einführen in den Belader ermöglicht, während die Höhe H des Nachschubs an Ringen eine ändere Sicherheitsanordnung bildet und eine zusätzliche Sicherheitsanordnung durch die visuelle Wahrnehmung der Gestellfarbe sichergestellt ist.

11. Maschine nach einem der vorhergehenden Ansprüche, dadurch gekennzeichnet, daß die Anordnung (4) zum Greifen und zur Handhabung der Kolben ein mit fünf Achsen versehener Roboter ist, der die Kolben ergreift auf Paletten (3), die sich mechanisch in eine exakte Arbeitsstellung bewegen, daß er die Kolben nacheinander in die Stellung zum Initialisieren und zur Höhenmarkierung bringt, danach gegenüber eines jeden Kegels (6,7,8) in deren Bohrung (150) auf Höhe der zugehörigen Nut für den zu setzenden Ring, anschließend den Kolben auf der Palette absetzt und den Zyklus mit den folgenden Kolben erneut beginnt und daß die fünfte Achse mit einem Greifer versehen ist, der sich um einen Ausrichtwinkel für die Spalten dreht, entsprechend der Anzahl der Ringe, die auf dem Kolben bei jedem Setzens eines neuen Ringes aufgebracht werden.

12. Maschine nach einem der Ansprüche 1 bis 10, dadurch gekennzeichnet, daß die Anordnung (4) zum Greifen und zur Handhabung der Kolben ein Portalmanipulator ist, der in einer Linie arbeitet, ausgehend von einer Palette (3), die mechanisch schrittweise entlang der Verschiebelinie verschoben wird und daß die senkrechte Achse mit einem sich drehenden Greifer versehen ist, identisch zu demjenigen des Roboters.

**Claims**

1. An automatic machine for the distribution and installation of rings on the pistons of thermal engines in which the rings are positioned successively on inner diameter expansion heads so thai-they may be positioned on the corresponding pistons, characterized in that it comprises:

– an automatic means (4) for gripping the pistons (1) on the pallets (3) of a conveyor (20) advancing mechanically in a precise stepwise manner and for their presentation at the different ring positioning stations,

– a means (5) for detecting the type of piston taken from the conveyor,

– a means (5) for the initialization and height positioning of the grooves of the pistons on the heads (6,7,8),

– a gripper for taking up the pistons and orienting the slot of the rings provided on the means (4) for taking up the pistons, rotating through a fraction of a turn corresponding to the number of piston grooves,

– barrels (9,10,11) for the selection and presentation of the heads (6,7, 8) corresponding to the diameter of the pistons and their handling means, presenting the head corresponding to the initialization code at right angles to the device for positioning the rings on the pistons,

– devices (18,2-18,3) for the automatic positioning of open rings expanded as they pass over the corresponding head (7,8),

– at least one device (24) for the automatic positioning of closed rings on the corresponding head (6),

– automatic slides (21,22,23) for the supply of the rings one by one under each head,

– loaders (15,16,17) for the distribution of the rings on each of the automatic supply slides,

– supply cores for the various types of rings,

– mechanical and electrical correctors provided to eliminate the rings which do not correspond to the type to be distributed and to prevent destination errors with respect to the various loaders.

2. A machine as claimed in claim 1, characterized in that the pallet (3) is provided with a code designating the type of pistons being conveyed to be fitted.

3. A machine as claimed in claim 1, characterized in that the means (5) for the initialization and height positioning is formed by a tube secured to the frame, whose upper surface, parallel to the piston grooves, forms the height reference surface of the piston gripper means (4) and in that a microcamera is secured in the tube so as to identify, from a reference program, a code borne by the lower surface of each piston.

4. A machine as claimed in claims 1, 2 and 3, characterized in that the barrels are provided to receive as many different head positions as there are variations of the diameter of pistons with open and/or closed rings, and in that the barrels receiving the heads for closed rings are fitted with centring and retaining grippers cooperating with an inner gripper of the device (24) for the positioning of the closed rings and in that the heads (7,8) for the positioning of the open rings are made rigid with the rotating body of the barrels and in that the rotation of the barrels, in order to present the head corresponding to the code detected by the code reader, is obtained by a rack and pinion and free wheel system driven by a jack, rotating the body of the barrel by one position during each movement, the code of the diameter of the piston to be equipped defining the number of movements in order to present the head of corresponding diameter.

5. A machine as claimed in claims 1 and 4, characterized in that the device for the automatic positioning of the open rings comprises an outer gripper (130), made from spring steel, with several arms rigid with a base (132) secured to a carriage moved vertically along the axis XX′ by a mechanical means and in that this gripper is disposed at rest below the supply position of the slide (109) for presenting the rings below the head (7,8) having a cone (163) for the recentring and expansion of the rings (108), the head being rigid with the barrel.

6. A machine as claimed in claims 1 and 4, characterized in that the device for positioning the closed rings comprises the same members as the device for positioning the open rings with the addition of wheels (146) for controlling the opening of the grippers (139,140) for the centring and retention of the head (6), acting on the ramp (147) of an opening lever (144) articulated at (145) on the support block for the gripper (139, 140) and means for the internal take-up, centring and immobilization of the head (6).

7. A machine as claimed in claims 1 and 6, characterized in that the inner take-up means of the head (6) are formed by a recentring sleeve (166) provided at its free end with a centring cone (165) moving in a bushing (167) cooperating with an inner gripper (170) of spring steel which is normally retracted, closed by a thruster (182) so as to bear on an inner cone (173) of the head (6) immobilizing the head in cooperation with the cone (165) of the sleeve (166) bearing on the lower inner cone (69) of the head, the assembly being moved synchronously in the cycle by a mechanical or electromechanical means.

8. A machine as claimed in claims 1, 5 and 6, characterized in that the slide comprises:

– means for receiving, orienting (64) and mechanically and electrically correcting (68, 69) the loader corresponding to the slide and a means (74) for immobilizing it associated with an electrical safety device (82) for monitoring closure,

– a ring cavity provided in a transfer table (109) moving below the loader and within its base in a machined portion (105,106), this cavity comprising a central hole (120) for the passage of an inner gripper of the take-up means of the head (6) and holes (116,117) for the passage of the arms of the external gripper (130) for the positioning of the rings,

– sensors secured to the supports (98,99,100, 101) adapted to recognize a mechanical identification code for additional characteristics of the rings fixed on the loader,

– photoelectric detectors (88) adapted to detect the supply level of the rings in the loader and to call the operator for reloading and stop the machine if the supply of rings is not renewed,

– a mechanical or electromechanical means for manoeuvring the carriage transferring the slide, below the corresponding head, equipped with end -of-stroke sensors and sensors monitoring the actual transfer of the ring below the head.

9. A machine as claimed in claims 1 and 8, characterized in that it is formed by a tube (52) comprising an upper collar (54) provided with mechanical correction means (55) for the ring supply cores, a base (53) comprising at the bottom a parallel recess (105,106) for retaining the rings open at (107), allowing the ring removal slide (109) to pass, mechanical correction means on the slide (56,57-58,59-60,61) and orientation means (62) cooperating with the complementary means of the slides, two holes (86,87) for the passage of the beams of the photoelectric detectors (88,89) for the re-supply of rings and the stoppage of the machine when rings are absent, a vertical groove (49) for the passage of the projecting portion (48) of the means for retaining the rings on the core, a mechanical encoding means (92,93,94,95,96,97) of additional characteristics of the rings.

10. A machine as claimed in claims 1 and 9, characterized in that the core for supplying the loaders with rings is made from plastic, is of tubular shape comprising a collar (35) provided with mechanical correctors complementary to those of the collar of the loader into which it is introduced and centred via a shoulder (40), the rings are oriented by means of a key (47) bearing on a shoulder (44) of the bearing (40) and on a lower retention means (45) allowing its positioning in the loader, the height (H) of reloading of rings forming a further correction and a further correction being obtained visually by the colour of the cores.

11. A machine as claimed in any one of the preceding claims, characterized in that the means (4) for gripping and manipulating the pistons is a robot with five axes, provided to take up the pistons from pallets (3) moving mechanically to a precise presentation position and presenting the pistons successively to the initialization and height referencing station, then at right angles to each head (6,7,8) in their bore (150) at the groove height corresponding to the ring to be positioned, then returning the piston to the pallet and recommencing the cycle with the following pistons, and in that its fifth axis is provided with a gripper rotating by an angle of orientation of the slots corresponding to the number of rings equipping the piston at each installation of a new ring.

12. A machine as claimed in any one of claims 1 to 10, characterized in that the means (4) for gripping and manipulating the pistons is a manipulator on a gantry provided to work on line from a pallet (3) advancing mechanically in a stepwise manner along the movement line and in that the vertical axis is fitted with rotary gripper identical to that of the robot.

FIG. 2

FIG. 3

FIG. 4

FIG. 6

FIG. 5

FIG. 11

FIG. 8

55

54

52

15,16,17

42

44

34

H

86

88

49

87

67

89

53

72

108

102

103

104

109

36,37

35

40

43

FIG.9

48

45

46

FIG.10

35

37

47 36 39 38

FIG. 7

2

1

30

31

32

33

62

84

49

105

106

55

111

110

56

57 55

FIG. 12

FIG. 13

FIG. 14

FIG. 15

FIG.16

18

FIG. 18

FIG. 19

FIG. 21

FIG. 20

FIG. 23

FIG. 22

FIG. 24

FIG. 25

186

182

171

170

6

183

165

108

109

166

130

178

177

167

180

185

173

172

184

169

174

170

176

179

144

146

FIG. 27

170

167

FIG. 26

167   174   170

FIG. 28

167

176

176

168

175